# EUROPEAN PATENT SPECIFICATION

(11) **EP 2 224 683 B1**
(45) Date of publication and mention of the grant of the patent: **19.02.2014**
(21) Application number: 09154018.7
(22) Date of filing: 27.02.2009
(51) Int. Cl.: H04W 4/20, H04L 29/08

(54) **Communications system providing mobile device notification based upon personal interest information and calendar events**
Kommunikationssystem mit mobiler Vorrichtungsbenachrichtigung basierend auf der persönlichen Information von Interesse und Kalenderereignissen
Système de communications fournissant une notification de dispositif mobile basé sur des informations d'intérêt personnel et des événements de calendrier

(43) Date of publication of application: 01.09.2010
(73) Proprietor: BlackBerry Limited, Waterloo, ON N2K 0A7 (CA)
(72) Inventor: Griffin, Jason T., Waterloo, Ontario, N2L 3W8 (CA); Brown, Michael K., Waterloo, Ontario, N2L 3W8 (CA); Scott, Sherryl Lee Lorraine, Waterloo, Ontario, N2L 3L3 (CA); Reeve, Scott, Waterloo, Ontario, N2L 3W8 (CA); Church, Mark, Waterloo, Ontario, N2L 3W8 (CA)
(74) Representative: Roberts, Gwilym Vaughan

(56) References cited:
- US-A1- 2004 181 604
- US-B1- 6 208 996
- US-B1- 6 745 193
- US-B1- 6 842 767

## Description

### Technical Field

The present disclosure relates to the field of communications systems, and, more particularly, to wireless communications systems, devices and related methods.

### Background

Mobile communications systems continue to grow in popularity and have become an integral part of both personal and business communications. Mobile telephones allow users to place and receive voice calls most anywhere they travel. Moreover, as mobile telephone technology has increased, so too has the functionality of mobile devices and the different types of devices available to users. For example, many mobile devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

As a result, users continue to spend more time using their mobile devices during the course of a day, as opposed to early cellular phones that were used only for phones calls. This has resulted in a significant interest from the advertising community in targeting advertisements to mobile devices.

One exemplary system for providing personalized information content over telephones is described in U.S. Patent No. 6,842,767. Telephone identifying information, such as the calling party's number, is used to identify, or create, user profiles for customization. The personalized content is specific to that user based on her/his telephone identifying information and may be further customized based on the current time, current date, the calling party's locales, and/or the calling party's dialect and speech patterns. Also, the telephone identifying information may support targeted advertising, content, and purchasing recommendations specific to that user. The system may use a voice password and/or touch-tone login system when appropriate to distinguish the caller or verify the caller's identity for specific activities. A caller is presented with personalized content based on her/his profile using the appropriate dialect as well as the caller's preferred content. Profiles can be constructed as the caller uses the system as well as through explicit designation of preferences. For example, as the user selects topics, as well as particular content, a record of actions can be maintained, This record of actions can be used to provide suggestions and direct the personalization of the system for the user.

Despite the advantages of such approaches, further functionality may be desirable for providing notifications such as advertisements in mobile wireless device applications.

US-B-6745193 is directed to a system for personalizing and refining policies within a general notification platform. The system includes a profile definition and selection system that receives contextual information relating to a user state. The profile definition and selection system generates and/or relays a set of control parameters based at least partially upon the contextual information, and a notification manager selectively sends a user notification and/or communication based upon the set of control parameters. Methods are provided for tuning the notification platform. This may include defining one or more context profiles, assigning values to parameters employed in one or more context profiles, determining a current user context, determining which of the one or more user profiles is consistent with the current user context, and utilizing the parameter value associated with the one or more context profiles consistent with the current user context to adjust the notification system.

US-A-2004181604 is directed towards a system for enhancing the relevance of information that is provided to users of communication devices. Content notifications relating to various categories/subcategories are pushed to a communication device by way of a notification service. Content usage information is received from the communication device. A modification of the set of topics targeted for transmission to the communication device occurs, where the modification is based on the content usage information of the communication device. The content notifications related to the modified topics are then pushed to the communication device via the notification service.

US-B-6208996 is directed to a system for maintaining a notification database in a mobile device. A notification scheduling program is run at a predetermined time. The notification scheduling program is configured to obtain information indicative of a plurality of notifications to be presented in the future. The notifications which are to be presented within a predetermined time period are entered in the notification database. The notification scheduling program is scheduled to run in response to expiration of the predetermined time period.

The invention is set out in the claims.

### Brief Description of the Drawings

FIG. 1 is a schematic block diagram of a communications system providing mobile wireless communications device notification features in accordance with an exemplary embodiment.

FIG. 2 is a flow diagram illustrating communication method aspects providing mobile wireless communications device notification features in accordance with an exemplary embodiment.

FIG. 3 is a front view of an exemplary mobile wireless communications device that may be used with the system of FIG. 1 and displaying calendar event and contact interest information.

FIG. 4 is a front view of the device of FIG. 3 displaying an advertisement resulting from the calendar event and contact interest information.

FIG. 5 is a schematic block diagram of an alternative embodiment of the system of FIG. 1.

FIG. 6 is a flow diagram illustrating additional communication method aspects in accordance with an alternative embodiment.

FIG. 7 is schematic block diagram of another communications system in accordance with an exemplary embodiment.

FIG. 8 is a flow diagram illustrating communication method aspects associated with the system of FIG. 7.

FIG. 9 is a schematic block diagram of an alternative embodiment of the communications system of FIG. 7.

FIG. 10 is a flow diagram illustrating communication method aspects associated with the system of FIG. 9.

FIGS. 11 is a schematic block diagram illustrating exemplary components of a mobile wireless communications device for use with the exemplary systems.

### Detailed Description

The present description is made with reference to the accompanying drawings, in which exemplary embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in different embodiments.

Generally speaking, a communications system is disclosed herein which may include at least one mobile wireless communications device for storing personal interest information for respective contacts and for storing calendar event data. The system may further include a notification server communicating with the at least one mobile wireless communications device via a wireless communications network and configured to access the personal interest information and calendar event data from the at least one mobile wireless communications device, and send notifications to the at least one mobile wireless communications device based upon the personal interest information and the calendar event data.

In one embodiment, the notification server may send the notifications to the at least one mobile wireless communications device based upon proximity to an upcoming calendar event. By way of example, the notification server may send the notifications to the at least one mobile wireless communications device with increasing frequency based upon increasing proximity to the upcoming calendar event. The notifications may include advertisements, for example. Further, the personal interest information may include contact interest information for respective contacts, products of interest, or both.

In addition, the at least one mobile wireless communications device may also be for exchanging electronic mail (email) messages with contacts, and the notification server may also send the notifications based upon the email messages. The notification server may be operable over the Internet for accessing additional contact interest information, and the notification sever may also send the notifications based upon the additional contact interest information. Moreover, the at least one mobile wireless communications device may also be for storing Internet addresses for the additional contact interest information (e.g., storing the Internet addresses of contact web pages), and the notification server may further accesses the stored Internet addresses from the at least one mobile wireless communications device.

In some embodiments, the notification server may send the notifications based upon bids submitted from a plurality of notification sources. By way of example, the at least one mobile wireless communications device may be at least one cellular communications device.

A related communications method may include storing calendar events and personal interest information in at least one mobile wireless communications device. The method may further include accessing the personal interest information and calendar events from the at least one mobile wireless communications device using a notification server communicating with the at least one mobile wireless communications device via a wireless communications network, and sending notifications to the at least one mobile wireless communications device from the notification server via the wireless communication network based upon the personal interest information and the calendar events.

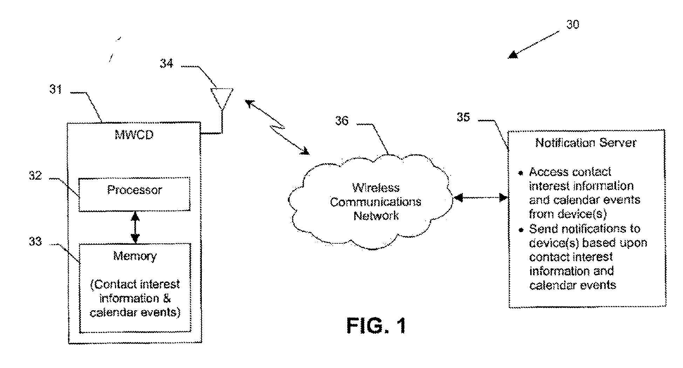

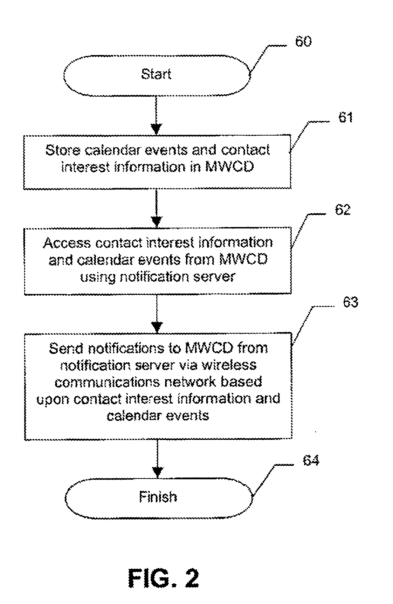

Referring initially to FIGS. 1 and 2, a communications system **30** and associated method aspects are first described. The system **30** illustratively includes one or more mobile wireless communications devices **31** (MWCDs), a notification server **35,** and a wireless communications network **36** through which the device(s) and notification server communicate. The device **31** illustratively includes a processor **32** (e.g., a microprocessor) and associated memory **33** (e.g., FLASH, removable memory (e.g., SD card), etc.) for running one or more software applications to store information such as contact interest information and calendar events (Blocks **60-61),** as will be discussed further below.

By way of example, the device **31** and wireless communications network **36** may operate in accordance with a cellular, wireless LAN (e.g., 802,11x, Bluetooth, etc.), WiMAX, satellite, etc., communications format, as will be appreciated by those skilled in the art. In some embodiments, more than one such wireless communications format may be used in the same device (e.g., cellular, wireless LAN, and Bluetooth). Moreover, the device **31** also illustratively includes one or more associated antennas **34.** Various types of mobile wireless communications devices may be used, such as mobile phones, PDAs, laptop computers, wireless-enabled cameras, wireless-enabled media players, etc., for example.

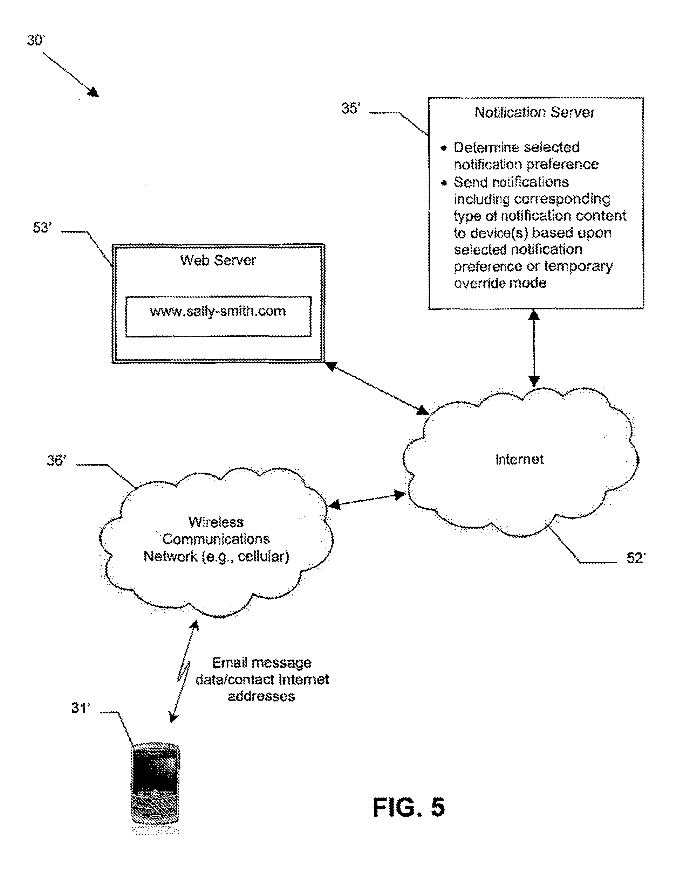

Generally speaking, the notification server **35** communicates with the device **31** via the wireless communications network **36** for accessing the contact interest information and calendar events from the device, at Block **62,** and sending notifications to the device based thereon, at Block **63,** thus concluding the method illustrated in FIG. 5 (Block **64**). This may be done in different ways. In one embodiment, the notification server **35** may periodically or intermittently prompt the device **31** to provide the calendar/preference information. Another approach is for the device **31** to provide this information to the notification server **35** at various times, such as upon a change in preference settings by the user.

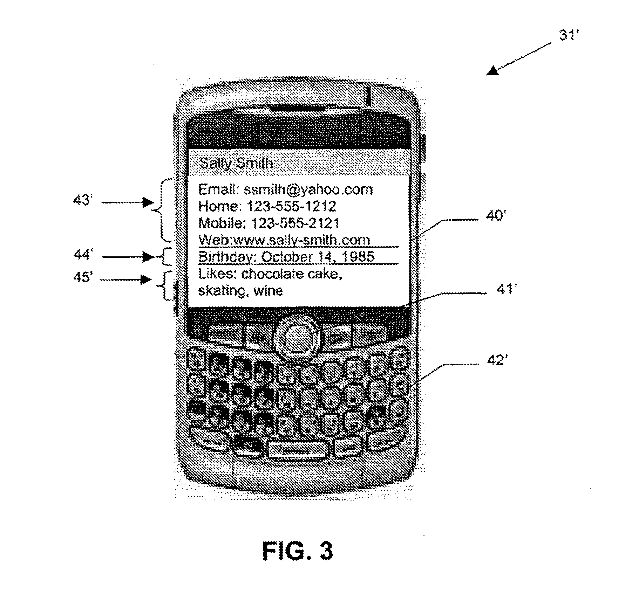

Turning more particularly to FIG. 3 through 5, an exemplary embodiment is shown in which the mobile device **31'** is a smart phone with PDA features. The device **31'** illustratively includes a display **40'** providing a user interface as shown, and one or more user input devices, such as a track ball **41,** and a key pad **42',** although various other types, combinations, or both, of user input devices may also be used. In the present example, a contact or address book application is running on the device **31'** which displays a contact entry for "Sally Smith." A first field **43'** includes Sally's contact information, namely an email address (ssmith@yahoo.com), home phone number (123-555-1212), mobile phone number (123-555-2121), and Sally's Web page address (www.sally-smith.com). A second field **44'** illustratively includes Sally's birth date (October 14), and a third field **45'** includes the contact interest information. Here, the contact's (i.e., sally's) interests include chocolate cake, skating, and wine. This information may be entered by the user of the device **31'** via the keypad **42',** by a computer that synchronizes with the device, etc., as will be appreciated by those skilled in the art.

It will be appreciated that the illustrated contact information is merely exemplary, and that the same or different information fields may be included in other embodiments. For example, in addition to or instead of the user's website address, other Web profile information may be stored, such as a MySpace profile or other social networking site profile. Further, other important dates for the contact may also be stored, such as anniversaries, cultural or religious holidays celebrated by the contact, etc. Additionally, further contact information such as home or work addresses, phone numbers, fax numbers, etc., may also be included in a given contact or address book profile, as will be appreciated by those skilled in the art.

By creating profiles for contacts, the notification server **35'** may advantageously provide recommendations as to suitable gifts for the calendar event occasions, e.g., for birthdays, Christmas, etc. The linking of personal interests with specific calendar dates allows advertisements to be provided based upon current inventory (e.g., to "push" overstocked items to matching personal interests), as well as items that are seasonal or time limited to those with calendar events for which products or gifts are needed in the given time period. In accordance with one example, a user may enter a contact's birthday into the device calendar and the contact's profile into the address book profile. A shopping list may be created for the contact based upon any notes that the user adds about the contact, or from entry fields that allow likes or preferences to be stored, such as for a sport, product, or otherwise. This may be done with entry fields in the address book application such as "likes," "wants," "has," "needs," etc. Such items may also be included in a user's shopping list, notes, memos, etc.

By providing the ability on the mobile device 31' to create such entries for oneself as well as contacts such as friends, family members, etc., when an item or interest is included in a shopping list for the user or associated with a contact, the notification server 35' may then send notifications (e.g., advertisements) relevant to what the user wishes to purchase for themselves or a contact. Moreover, by associating the interests to a calendar event, such as a birthday for a contact, as the proximity to the birthday increases (i.e., the date gets closer) the user then advantageously receives advertisements or other notifications based on the item.

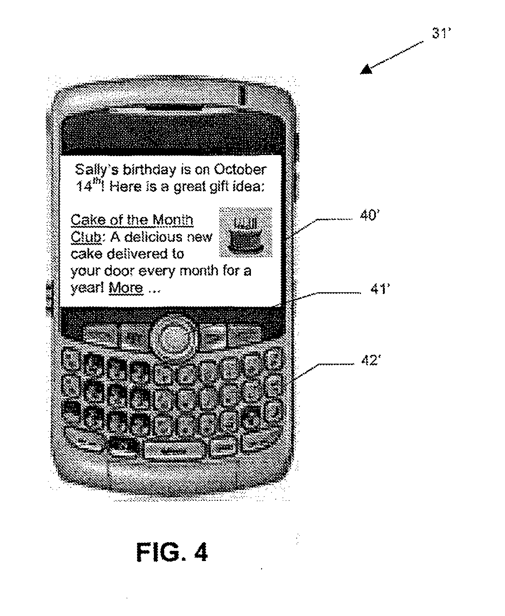

In the example of FIGS. 3 and 4, the advertisement relates to cakes, since one of the "likes" in Sally Smith's profile is "chocolate cake." That is, the contact or user interest information may include products or other items or activities of interest to respective contacts or the user, and the advertisements correspond to the products or items or activities of interest. The advertisement seen in FIG. 4 is for a cake of the month club because this corresponds with Sally's interest in cakes, and it is provided along with a helpful reminder that Sally's birthday is approaching on October 14th. Of course, notifications and advertisements may take other forms in different embodiments than the one shown in the present example.

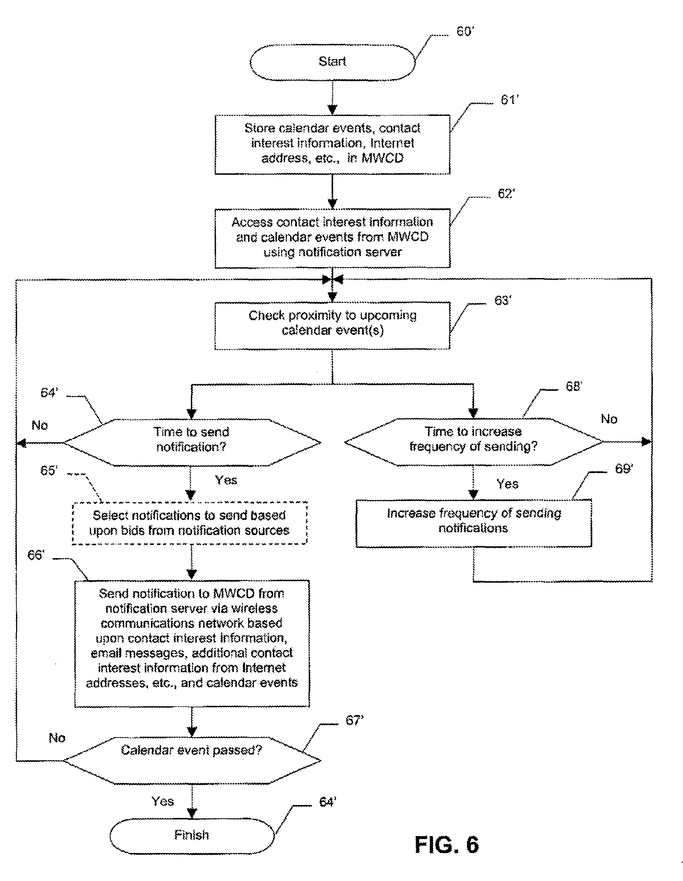

A related communications method is now described with further reference to FIG. 6. Beginning at Block **60',** the method illustratively includes storing calendar events and contact interest information for respective contacts in the device **31',** and accessing the contact interests information and calendar events from the device using the notification server **35'** via the wireless communications network **36',** at Blocks **61'-62',** as noted above. If proximity to the calendar event is such that sending a notification to the device **31'** is warranted (e.g., it is within one month of the event), at Blocks **63'-64',** the notification is sent to the mobile device **31'** from the notification server **35'** via the wireless communication network **36'** based upon the contact interest information and the calendar events, at Block **66'.**

In some embodiments, the notification server **35'** may optionally send the notifications based upon bids submitted from a plurality of notification sources, at Block **65'.** For example, advertisers or other notification providers may bid to have advertisements for their respective goods or services sent to users who have indicated a preference, either for themselves or for their contacts. In the above noted example, the cake vendor that bid the highest amount that they would be willing to pay to have their cake advertisement sent to a user indicating "cakes" as an interest would have their advertisement sent first to the mobile device **31'.** Moreover, as a particular calendar event approaches, notifications such as advertisements may cost more to place (i.e., the price of the advertisements may be changed based upon proximity to the calendar event). Various approaches for receiving and selecting bids for advertisements will be appreciated by those skilled in the art which may be used herein, and bidding need not be required in all embodiments.

Moreover, the notifications may also be based upon not only the information included in a user's shopping list, contact profile, etc., but may further be based upon preference information included in emails exchanged between the user and contacts (or others), for example. For instance, copies of the email stored on the mobile device **31'** or on an email server (which may also be the notification server **35'** in some embodiments, though it need not be in all embodiments), could be searched for key words that will trigger particular types of notifications. For examples, references in emails to a particular type of sports may result in notifications or offers for tickets related to sporting events, sports apparel, etc. Other forms of communications may also be "mined" for such preference information, such as short message service (SMS) messages, instant messages (IM), text converted from phone conversations, weblogs or bogs, etc.

One way to conceptually categorize how information about personal interest information is determined or captured is that such information may be considered as static or dynamic content. Static content may be considered to be what the user enters in a wish list, etc., whereas dynamic content may be considered to be information mined from emails, blogs, etc. Potentially, information most recently entered or sent in an email, etc., is particularly relevant, so the notification server **35'** may advantageously move items up in a ranking in terms of what may be recommended versus what is to be listed in a shopping list, etc., as will be appreciated by those skilled in the art. If there is any ambiguity in what a contact intends or desires, the notification server **35'** may also advantageously send an email, etc., to a given user asking what that person would prefer as a gift, and then send the updated information to a friend attempting to buy or contribute to a gift for the given user.

Similarly, another source for obtaining personal or contact preference information may be user or contact websites, such as a personal Web page, blog, MySpace or other social networking page, etc. That is, the notification server **35'** may be operable over the Internet **52'** for accessing additional contact interest information, and the notification sever may also send the notifications based upon the additional contact interest information. More specifically, the notification server **35'** may access such Internet addresses from the mobile device **31'.** In the example of FIG. 5, Sally Smith's personal Web page, www.sally-smith.com, is hosted by a Web server **53'.** The notification server **35'** (or other-computer) first accesses this URL (or IP address) from the stored profile on the mobile device **31',** for example, and then accesses Sally's Web page accordingly to search the text thereof for key words that will trigger particular types of notifications, as will be appreciated by those skilled in the art.

In accordance with one example utilizing social network entries, a user may set up a shopping list with a link to Sally's social network page. If Sally enters something on her social network page that she likes as a "Favorite" or "Wish list" item, the notification to the mobile device **31'** could indicate that "Sally has just indicated she would "love to have a new pair of purple high heel shoes". From this notification the user may be provided with product recommendations and options such as "add item to shopping list," "buy now," or "set a reminder for Sally's birthday," etc.

The notifications associated with a particular calendar event may continue to be presented to the mobile device **31'** until the event has passed, at Block **67',** for example. In some embodiments, the notification server **35'** may advantageously send the notifications to the mobile device **31'** with increasing frequency based upon increasing proximity to the upcoming calendar event, at Blocks **68', 69'.** That is, the notification server **35'** may send notifications such as advertisements to the mobile device **31'** more frequently as the calendar event draws nearer. Various schedules for sending of notifications may be used in different embodiments, as will be appreciated by those skilled in the art. Another trigger which may increase the frequency of sending of notifications, for example, is a request from the user for suggestions for gift ideas for the upcoming event (e.g., Sally's birthday).

If Sally's Birthday is not stored in the mobile device calendar, there may be a queue to "add to Calendar." This type of queue may occur if the information is captured from an email communication from Sally that "my birthday is coming up and I'd like a new pair of purple shoes," for example. Another possibility is that a user may choose to add a "'Buy by <date>" when a notification is sent to her indicating an item that someone would like. A user may receive a message that "Jason would like a video game," which the user would choose to add to her shopping list, but also indicate that she would like to buy this by <date>. This may be added to her calendar, or tagged in a shopping list as a "Purchase By ..." item.

In accordance with various examples, advertisements may be facilitated based upon a user a shopping list for a holiday (e.g., Christmas, Easter, etc.), possible gift ideas for an anniversary, etc. Another example may be a travel alert based upon a stored itinerary in the mobile device **31'.** Notification may also be based upon searches of application data to identify memberships such as the American (AAA) or Canadian Automobile Association (CAA), for example. Another possibility is gearing the notifications towards enterprise users for travel or procurement of IT materials, etc.

The foregoing embodiments may be particularly advantageous in that a user may have a shopping list/wish list on their mobile device **31'** to which he or she can add items to at any time. This list may then be used "real time," or on an "as needed" basis from a user's perspective to get the best deal at the time he or she wishes to purchase a particular item or service. Because of the ability to more directly target likely customers, this may advantageously permit additional discounts to be given to users through coupons, etc., than the user may otherwise be able to obtain by simply going into a store without an advertisement provided by the notification server **35',** although this need not be the case in all embodiments.

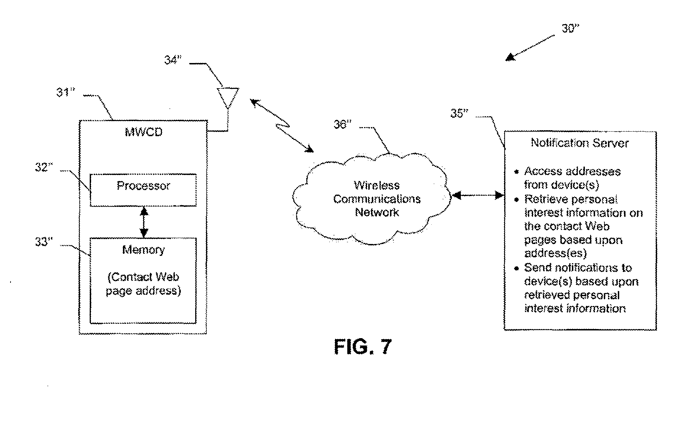

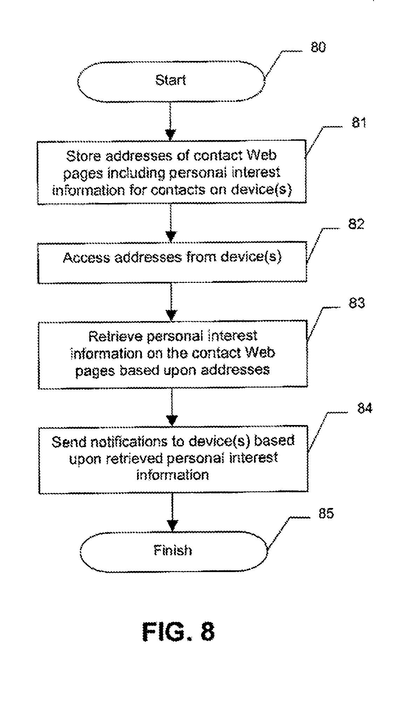

Turning additionally to the alternative system **30"** and method illustrated in FIGS. 7 and 8, the notification server **35"** may advantageously access the addresses of one or more contact Web pages (e.g., MySpace, Facebook, etc.) stored on the device **31",** at Blocks **80-82,** retrieve personal interest information on the contact Web pages based upon the addresses, at Block **83,** and send notifications to the device(s) based upon the retrieved personal interest information, at Block **84,** thus concluding the method illustrated in FIG. 8 (Block **85).** More particularly, in the illustrated embodiment the notification server **35"** need not access calendar information stored on devices **31"** prior to searching contact Web pages for the contacts' personal interest information, although stored calendar events (and personal interest information stored on devices **31"**) may also be used, as discussed above.

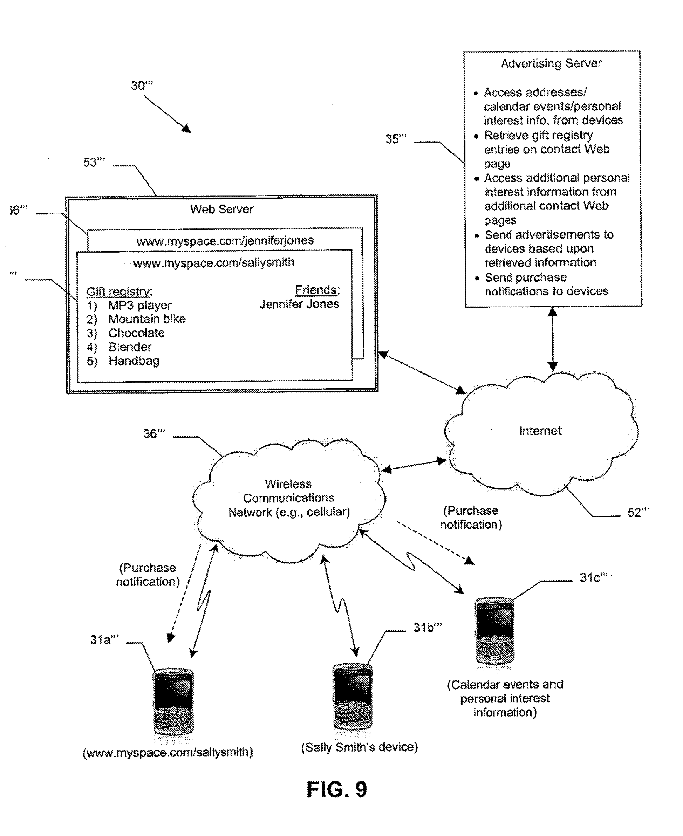

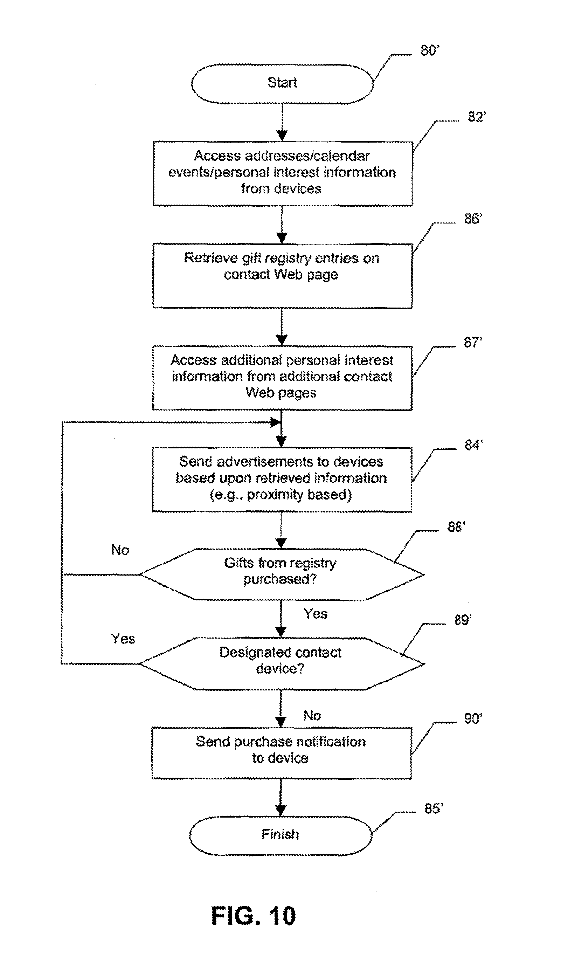

Referring additionally to FIGS. 9 and 10, a related system **30'''** in which the contact Web pages include gift registries is now described. In the illustrated embodiment, the notification server **35'''** (which in this example is an advertising server) accesses a contact Web address from the device **31a'''.** In the illustrated example, the stored address is for a contact Web page **55'''** for a contact Sally Smith, and the address www.myspace.com/sallysmith. The device **31b'''** is Sally Smith's personal device, and the device **31c'''** is associated with another contact of Sally Smith. The device **31c'''** does not have Sally Smith's contact Web page address stored thereon, but it does have calendar events (e.g., Sally's birthday) and personal interest information for Sally stored thereon.

Once the advertising server **35'''** accesses the device **31a'''** and retrievers the contact Web page for Sally Smith, it may advantageously access the gift registry on Sally Smith's contact Web page **55''',** which in the present example illustratively includes gift registry entries including an MP3 player, a mountain bike, chocolate, a blender, and a handbag, at Block **82'.** The advertising server **35'''** also advantageously accesses the calendar and personal interest information for Sally Smith stored on the device **31c'''** (and may access such information, as well as her contact Web page **55''',** from Sally Smith's device **31b'''** in some embodiments as well).

Moreover, in addition to the gift registry entries, the advertising server **35"** may also advantageously retrieve additional contact information from Sally Smith's Web page **55"',** such as a list of additional contacts or friends. In the illustrated example, the Web page **55"'** lists an additional friend named Jennifer Jones, with an associated link to Jennifer Jones' contact Web page **56"',** which in the illustrated example is www.myspace.com/jenniferjones. The advertising server **35"'** may advantageously access the page **56"'** to determine additional gift ideas for Sally Smith, or to obtain contact information for Jennifer Jones (e.g., an email address) to send advertisements to her as well, or both, at Block **87'.**

In the context of the present gift registry embodiment, advertisements are sent to the devices **31a"', 31c"',** but not Sally Smith's device **31b"',** based upon the retrieved personal interest/gift information noted above, at Block **84'.** That is, since Sally Smith is to be the recipient of the gifts, she may advantageously be excluded from receiving advertisements for gifts, which may indicate to her what gifts have been purchased for her already. Along these lines, the advertising server **35"** may further send purchase notifications to the device **31a"'** or **31c"'** (but not the device **31b"'** of the designated contact, here Sally Smith) when the user of the other device makes a purchase of a gift on the gift registry, at Blocks **88'-90'.** That is, when someone makes a purchase of one of the gifts, the other contacts who are being advertised to are notified that the gift has already been purchased so they will know not to also purchase the same gift, but can instead purchase something different. Thus, the designated contact (here Sally Smith) will advantageously not know which items have been purchased for her as gifts, while others will have the benefit of knowing what has already been purchased, for example.

In some applications, if Sally Smith's page **55"'** does not have a gift registry or other indications of her personal preferences for gift items, then the advertising server may advantageously retrieve personal preference information of other contacts or friends associated with Sally Smith (e.g., Jennifer Jones), and use this personal preference information as the basis for generating advertisements to send to the devices **31a"', 31c"'.** That is, the advertising server **35"'** may "assume" that friends of a designated contact share common interests and likes, as is often the case with close friends, and therefore select advertisements accordingly. The additional features discussed above, such as sending notifications based upon a proximity to calendar events (and changing the frequency thereof based upon the proximity) may also advantageously be implemented in the present gift registry embodiment, as will be appreciated by those skilled in the art,

Thus, for example, if a given contact has few or no gifts or wish list items, either in his or her wish list or as indicated in any of his or her communications, (e.g., emails, etc.), the advertising server **35"'** may advantageously check the contacts of any designated friends in the user's social network or contacts in an address book for recommendations. Again, this feature is based on the premise that if someone is designated as a friend then that person will tend to like the same things that the user likes, and vice-versa.

In some embodiments, if a user indicates that he/she wants to buy a gift for someone but for whatever reason is unable to complete the transaction at that time, a reminder may be set. The reminder may be provided more frequently as the date of the event comes closer, for example. Another advantageous feature is that a user may be permitted to contribute to a gift for a given user that costs more money than what a friend could otherwise afford or wants to spend on his or her own. That is, the system would allow multiple friends to contribute and share the expense of a gift for given user. In such case, as the date of an event draws closer, reminders or notifications may advantageously be sent to a group of friends informing that them one or more friends or contacts had contributed to a gift for a given user, and asking the others if they would like to contribute so that the given user can indeed receive the gift.

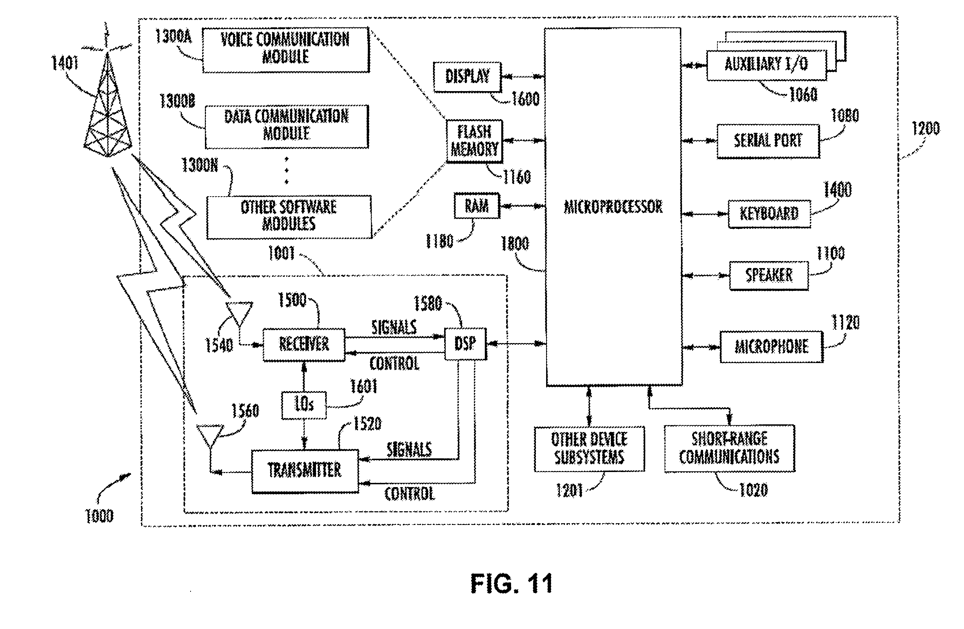

Exemplary components of a hand-held mobile wireless communications device **1000** that may be used in accordance the system **20** is further described in the example below with to FIG. 11. The device **1000** illustratively includes a housing **1200,** a keypad **1400** and an output device **1600**. The output device shown is a display **1600,** which may comprise a full graphic LCD. In some embodiments, display **1600** may comprise a touch-sensitive input and output device. Other types of output devices may alternatively be utilized, A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

In addition to the processing device **1800,** other parts of the mobile device **1000** are shown schematically in FIG. 11. These include a communications subsystem **1001;** a short-range communications subsystem **1020**; the keypad **1400** and the display **1600**, along with other input/output devices **1060, 1080, 1100** and **1120;** as well as memory devices **1160, 1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180.**

The processing device **1800**, in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PTM) application, may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500,** a transmitter **1520,** and one or more antennas **1540** and **1560**. In addition, the communications subsystem **1001** also includes a processing module, such as a digital signal processor (DSP) **1580**, and local oscillators (LOs) **1601,** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401,** Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control processes implemented in the DSP **1580**.

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/o device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100,** and signals for transmission are generated by a microphone **1120**. Alternative voice or audio I/O subsystems, such as a voice message recording subsystem, may also be implemented on the device **1000.** In addition, the display **1600** may also be utilised in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the forgoing descriptions and the associated drawings. Therefore, it is understood that various modifications and embodiments are intended to be included within the scope of the appended claims.

## Claims

1. A communications system (30) comprising:
at least one mobile wireless communications device (31) for storing personal interest information and for storing calendar event data, wherein the personal interest information comprises contact interest information including products or activities of interest for respective contacts; and
a notification server (35) communicating with said at least one mobile wireless communications device via a wireless communications network (36), wherein the server notification is configured to
access the personal interest information and calendar event data from said at least one mobile wireless communications device, and
send notifications corresponding to the products or activities of interest to said at least one mobile wireless communications device based upon the personal interest information and the calendar event data.

2. The communications system (30) of Claim 1 wherein said notification server (35) is configured to send the notifications to said at least one mobile wireless communications device (31) based upon proximity to an upcoming calendar event.

3. The communications system (30) of Claim 2 wherein said notification server (35) is configured to send the notifications to said at least one mobile wireless communications device (31) with increasing frequency based upon increasing proximity to the upcoming calendar event.

4. The communications system (30) of Claim 1 wherein the notifications comprise advertisements.

5. The communications system (30') of Claim 1
wherein said notification server (35') is operable over the Internet (52') for accessing additional contact interest information; and
wherein said notification sever is also operable to send the notifications based upon the additional contact interest information.

6. The communications system (30) of Claim 5,
wherein said at least one mobile wireless communications device (31) is also for storing Internet addresses for the additional contact interest information; and
wherein said notification server (35) is further operable to access the stored Internet addresses from said at least one mobile wireless communications device.

7. The communications system (30) of Claim 1,
wherein said at least one mobile wireless communications device (31) is also for exchanging electronic mail (email) messages with contacts; and
wherein said notification server (35) is also operable to send the notifications based upon the email messages.

8. The communications system (30) of Claim 1 wherein
said notification server (35) is operable to send the notifications based upon bids submitted from a plurality of notification sources.

9. The communications system (30) of Claim 1 wherein said at least one mobile wireless communications device (31) comprises at least one cellular communications device.

10. A communications method comprising:
storing calendar event data and personal interest information in at least one mobile wireless communications device (31), wherein the personal interest information comprises contact interest information for respective contacts including products or activities of interest;
accessing the personal interest information and calendar event data from the at least one mobile wireless communications device using a notification server (35) communicating with the at least one mobile wireless communications device via a wireless communications network (36); and
sending notifications corresponding to the products or activities of interest to the at least one mobile wireless communications device from the notification server via the wireless communication network based upon the personal interest information and the calendar event data.

11. The method of Claim 10 wherein sending the notifications comprises sending the notifications based upon proximity to an upcoming calendar event.

12. The method of Claim 11 wherein sending comprises sending the notifications to the at least one mobile wireless communications device (31) with increasing frequency based upon increasing proximity to the upcoming calendar event.

13. The method of Claim 10 wherein the notifications comprise advertisements.

## Patentansprüche

1. Ein Kommunikationssystem (30), das aufweist:
zumindest eine mobile drahtlose Kommunikationsvorrichtung (31) zum Speichern von Information über persönliches Interesse und zum Speichern von Kalenderereignisdaten, wobei die Information über persönliches Interesse eine Kontaktinteresse-Information aufweist, einschließlich Produkten oder Aktivitäten von Interesse für jeweilige Kontakte; und
einen Benachrichtigungsserver (35) zum Kommunizieren mit der zumindest einen mobilen drahtlosen Kommunikationsvorrichtung über ein drahtloses Kommunikationsnetzwerk (36), wobei die Server-Benachrichtigung konfiguriert ist zum
Zugreifen auf die Information über persönliches Interesse und die Kalenderereignisdaten von der zumindest einen mobilen drahtlosen Kommunikationsvorrichtung, und
Senden von Benachrichtigungen entsprechend den Produkten oder Aktivitäten von Interesse an die zumindest eine mobile drahtlose Kommunikationsvorrichtung basierend auf der Information über persönliches Interesse und den Kalenderereignisdaten.

2. Das Kommunikationssystem (30) gemäß Anspruch 1, wobei der Benachrichtigungsserver (35) konfiguriert ist zum Senden der Benachrichtigungen an die zumindest eine mobile drahtlose Kommunikationsvorrichtung (31) basierend auf einer Nähe zu einem anstehenden Kalenderereignis.

3. Das Kommunikationssystem (30) gemäß Anspruch 2, wobei der Benachrichtigungsserver (35) konfiguriert ist zum Senden der Benachrichtigungen an die zumindest eine mobile drahtlose Kommunikationsvorrichtung (31) mit zunehmender Häufigkeit basierend auf einer zunehmenden Nähe zu dem anstehenden Kalenderereignis.

4. Das Kommunikationssystem (30) gemäß Anspruch 1, wobei die Benachrichtigungen Werbung aufweisen.

5. Das Kommunikationssystem (30') gemäß Anspruch 1,
wobei der Benachrichtigungsserver (35') über das Internet (52') betriebsfähig ist zum Zugreifen auf zusätzliche Kontaktinteresse-Information; und
wobei der Benachrichtigungsserver auch betriebsfähig ist zum Senden der Benachrichtigungen basierend auf der zusätzlichen Kontaktinteresse-Information.

6. Das Kommunikationssystem (30) gemäß Anspruch 5,
wobei die zumindest eine mobile drahtlose Kommunikationsvorrichtung (31) auch vorgesehen ist zum Speichern von Internetadressen für die zusätzliche Kontaktinteresse-Information; und
wobei der Benachrichtigungsserver (35) weiter betriebsfähig ist zum Zugreifen auf die gespeicherten Internet-Adressen von der zumindest einen mobilen drahtlosen Kommunikationsvorrichtung.

7. Das Kommunikationssystem (30) gemäß Anspruch 1,
wobei die zumindest eine mobile drahtlose Kommunikationsvorrichtung (31) auch vorgesehen ist zum Austauschen von "elektronische Mail (Email)-Nachrichten mit Kontakten; und
wobei der Benachrichtigungsserver (35) auch betriebsfähig ist zum Senden der Benachrichtigungen basierend auf den Email-Nachrichten.

8. Das Kommunikationssystem (30) gemäß Anspruch 1, wobei der Benachrichtigungsserver (35) auch betriebsfähig ist zum Senden der Benachrichtigungen basierend auf Angeboten, die von einer Vielzahl von Benachrichtigungsquellen abgegeben werden.

9. Das Kommunikationssystem (30) gemäß Anspruch 1, wobei die zumindest eine mobile drahtlose Kommunikationsvorrichtung (31) zumindest eine zellulare Kommunikationsvorrichtung aufweist.

10. Ein Kommunikationsverfahren, das aufweist:
Speichern von Kalenderereignisdaten und von Information über persönliches Interesse in zumindest einer mobilen drahtlosen Kommunikationsvorrichtung (31), wobei die Information über persönliches Interesse eine Kontaktinteresse-Information für jeweilige Kontakte aufweist, einschließlich Produkten oder Aktivitäten von Interesse;
Zugreifen auf die Information über persönliches Interesse und die Kalenderereignisdaten von der zumindest einen mobilen drahtlosen Kommunikationsvorrichtung unter Verwendung eines Benachrichtigungsservers (35) zum Kommunizieren mit der zumindest einen mobilen drahtlosen Kommunikationsvorrichtung über ein drahtloses Kommunikationsnetzwerk (36); und
Senden von Benachrichtigungen entsprechend den Produkten oder Aktivitäten von Interesse an die zumindest eine mobile drahtlose Kommunikationsvorrichtung von dem Benachrichtigungsserver über das drahtlose Kommunikationsnetzwerk basierend auf der Information über persönliches Interesse und den Kalenderereignisdaten.

11. Das Verfahren gemäß Anspruch 10, wobei das Senden der Benachrichtigungen aufweist ein Senden der Benachrichtigungen basierend auf einer Nähe zu einem anstehenden Kalenderereignis.

12. Das Verfahren gemäß Anspruch 11, wobei das Senden aufweist ein Senden der Benachrichtigungen an die zumindest eine mobile drahtlose Kommunikationsvorrichtung (31) mit zunehmender Häufigkeit basierend auf einer zunehmenden Nähe zu dem anstehenden Kalenderereignis.

13. Das Verfahren gemäß Anspruch 10, wobei die Benachrichtigungen Werbung aufweisen.

## Revendications

1. Système de communication (30), comprenant :
au moins un dispositif de communication sans fil mobile (31) destiné à stocker des informations d'intérêt personnel et à stocker des données d'événements calendaires, dans lequel les informations d'intérêt personnel comprennent des informations d'intérêt de contact comportant des produits ou des activités d'intérêt pour des contacts respectifs ; et
un serveur de notification (35) communiquant avec ledit au moins un dispositif de communication mobile sans fil via un réseau de communications sans fil (36), dans lequel la notification du serveur est configurée pour :
accéder aux informations d'intérêt personnel et aux données d'événements calendaires depuis ledit au moins un dispositif de communication sans fil mobile, et
envoyer des notifications correspondant aux produits ou aux activités d'intérêt audit au moins un dispositif de communication sans fil mobile sur la base des informations d'intérêt personnel et des données d'événements calendaires.

2. Système de communication (30) selon la revendication 1, dans lequel ledit serveur de notification (35) est configuré pour envoyer les notifications audit au moins un dispositif de communications sans fil mobile (31) sur la base de la proximité d'un événement calendaire imminent.

3. Système de communication (30) selon la revendication 2, dans lequel ledit serveur de notification (35) est configuré pour envoyer les notifications audit au moins un dispositif de communications sans fil mobile (31) avec une fréquence croissante en fonction de la proximité croissante de l'événement calendaire imminent.

4. Système de communication (30) selon la revendication 1, dans lequel les notifications comprennent des annonces publicitaires.

5. Système de communication (30') selon la revendication 1, dans lequel ledit serveur de notification (35') peut être mis en oeuvre par l'intermédiaire de l'internet (52') pour accéder à des informations d'intérêt de contacts supplémentaires ; et
dans lequel ledit serveur de notification peut également être mis en oeuvre pour envoyer les notifications sur la base des informations d'intérêt de contact supplémentaires.

6. Système de communication (30) selon la revendication 5,
dans lequel ledit au moins un dispositif de communication sans fil mobile (31) est également destiné à stocker des adresses Internet pour les informations d'intérêt de contact supplémentaires ; et
dans lequel ledit serveur de notification (35) peut en outre être mis en oeuvre pour accéder aux adresses Internet stockées depuis ledit au moins un dispositif de communication sans fil mobile.

7. Système de communication (30) selon la revendication 1,
dans lequel ledit au moins un dispositif de communication sans fil mobile (31) est également destiné à échanger des messages de courrier électronique (courriels) avec des contacts ; et
dans lequel ledit serveur de notification (35) peut également être mis en oeuvre pour envoyer les notifications sur la base des messages de courriels.

8. Système de communication (30) selon la revendication 1,
dans lequel ledit serveur de notification (35) peut être mis en oeuvre pour envoyer les notifications sur la base d'offres proposées par une pluralité de sources de notification.

9. Système de communication (30) selon la revendication 1,
dans lequel ledit au moins un dispositif de communication sans fil mobile (31) comprend au moins un dispositif de communication cellulaire.

10. Procédé de communication, consistant à :
stocker des données d'événements calendaires et des informations d'intérêt personnel sur au moins un dispositif de communication sans fil mobile (31), dans lequel les informations d'intérêt personnel comprennent des informations d'intérêt de contacts pour des contacts respectifs concernant des produits ou des activités d'intérêt ;
accéder aux informations d'intérêt personnel et aux données d'événements calendaires depuis ledit au moins un dispositif de communication mobile en utilisant un serveur de notification (35) communiquant avec ledit au moins un dispositif de communication mobile sans fil via un réseau de communication sans fil (36) ; et
envoyer des notifications correspondant aux produits ou aux activités d'intérêt audit au moins un dispositif de communication sans fil mobile depuis le serveur de notification, via le réseau de notification sans fil sur la base des informations d'intérêt personnel et des données d'événements calendaires.

11. Procédé selon la revendication 10, dans lequel l'envoi des notifications consiste à envoyer les notifications sur la base de la proximité d'un événement calendaire imminent.

12. Procédé selon la revendication 11, dans lequel l'envoi consiste à envoyer les notifications à l'au moins un dispositif de communication sans fil mobile (31) avec une fréquence croissante en fonction de la proximité croissante de l'événement calendaire imminent.

13. Procédé selon la revendication 10, dans lequel les notifications comprennent des annonces publicitaires.
